# EUROPÄISCHE PATENTSCHRIFT

(11) **EP 4 182 210 B1**
(45) Veröffentlichungstag und Bekanntmachung des Hinweises auf die Patenterteilung: **18.11.2026**
(21) Anmeldenummer: 21705497.2
(22) Anmeldetag: 12.02.2021
(51) Int. Cl.: B62K 5/02, B62K 5/10

(54) **DREIRÄDRIGES FAHRZEUG MIT MEHRTEILIGEM RAHMEN**
THREE-WHEELED VEHICLE HAVING A MULTI-PART FRAME
VÉHICULE À TROIS ROUES AYANT UN CADRE EN PLUSIEURS PARTIES

(30) Priorität: 15.07.2020 DE 102020118623
(43) Veröffentlichungstag der Anmeldung: 24.05.2023
(73) Patentinhaber: Bayerische Motoren Werke Aktiengesellschaft, 80809 München (DE)
(72) Erfinder: AUGUSTIN, Stephan, 80804 Muenchen (DE); BOBINGER, Robert, 86316 Hügelshart (DE)
(86) Internationale Anmeldenummer: PCT/EP2021/053483
(87) Internationale Veröffentlichungsnummer: WO 2022/012783

(56) Entgegenhaltungen:
- WO-A1-2018/172784
- WO-A1-2019/162714
- WO-A2-2006/006859
- CN-U- 201 923 270
- DE-A1- 4 124 926
- DE-A1- 4 124 926
- JP-A- H03 153 484
- JP-A- H09 272 481
- US-A- 3 504 934
- US-A- 3 880 449
- US-A- 3 995 875
- US-A1- 2007 152 422

## Beschreibung

Die Erfindung betrifft ein dreirädriges Fahrzeug, insbesondere ein Lastenrad, welches einen mehrteiligen und insbesondere zweigeteilten Rahmen aufweist, dessen Rahmenteile durch zumindest ein Gelenk verbunden sind und dessen zumindest eines Gelenk eine Schwenkachse bestimmt, um welche die Rahmenteile relativ zueinander bzw. gegeneinander verschwenkbar sind.

Lastenfahrräder werden in der heutigen Zeit und vor dem Hintergrund der Notwendigkeit neuer Konzepte und Lösungen für den Individualverkehr immer beliebter. Zu diesen bzw. allgemein zu dreirädrigen Fahrzeugen ist daher im Stand der Technik bereits eine Vielzahl von Umsetzungen bekannt.

Beispielsweise gibt es zwei- und dreirädrige Lastenfahrräder, wobei bei dreirädrigen Lastenfahrrädern ein Radpaar mit 2 Rädern vorne oder hinten angeordnet sein kann. Zu solchen Lastenrädern bzw. allgemein zu solchen dreirädrigen Fahrzeugen zählen nicht nur rein durch Pedale angetriebene Räder sondern ebenso E-Bikes, welche den mechanischen durch einen elektrischen Antrieb unterstützen, aber auch andere dreirädrige Fahrzeuge, welche beispielsweise ausschließlich durch einen Motor angetrieben werden.

Lastenräder, Fahrräder oder E-Bikes mit mehreren Rädern sind jedoch in der Regel lang, schwer und schwierig zu lenken. Besonders, wenn zusätzlich Last mitgeführt wird, kann es dazu kommen, dass diese als bewegte Masse an bzw. auf dem Fahrzeug wirkt und den Lenkbewegungen entgegenarbeitet, was zu kritischen bis hin zu gefährlichen und unkontrollierbaren Lenkmanövern und somit Unfällen führen kann.

Neben der schwierigen Lenkung kann der Rahmen durch die bewegten Massen bei Lastwechseln in Schwingung geraten, was auf Dauer zu Lasten der Steifigkeit und Stabilität des Rahmens gehen kann, so dass es zu einem Rahmenbruch kommen kann.

Aus diesem nachteilhaften und für viele Fahrer unerwarteten Verhalten ergibt sich, dass die im Stand der Technik bekannten Lastenräder bzw. dreirädrigen Fahrzeuge für Fahrer, welche ein gewöhnliches Fahrrad gewohnt sind, nicht intuitiv bedienbar sind. Entsprechend benötigen viele Fahrer zunächst eine gewisse Gewöhnung und Training, bevor die Lastenräder sicher bewegt werden können bzw. bevor die Lastenräder im Verkehr bewegt werden sollten.

Bei Fahrrädern mit zwei Rädern bzw. einem Radpaar an der Front ist teils eine aufwändige Achslenkung nötig. Varianten von Lastenrädern mit zwei Rädern bzw. einem Radpaar hinten, wie beispielsweise herkömmliche "Rikschas", sind oftmals starr ausgeführt, so dass der Rahmen des Fahrrades nicht in die Kurve geneigt werden kann.

Es gibt jedoch auch Varianten von dreirädrigen Fahrzeugen, bei welchen der gesamte Rahmen oder zumindest ein Teil und insbesondere der vordere Teil des Rahmens seitlich schwenkbar ist und dadurch bei Kurvenfahrten in die Kurve geneigt werden kann, was grundsätzlich eine ergonomischere und dynamischere Fahrweise ermöglichen soll und auch dem Verhalten eines "normalen" Fahrrades entspricht.

Solche Fahrzeuge mit zumindest teilweise schwenkbarem Rahmen sind beispielsweise aus den Dokumenten DE 10 2014 113 710 A1,
DE 10 2016 115 803 A1, EP 3 205 564 B1, DE 10 2016 120 697 B4, FR 3 020 335 B1, JP 5995434 B2, KR 10-1197628, US 3,605,929 A, US 6,104,154 A und WO 2011/107674 A1 bekannt. Weitere derartige Fahrzeuge sind in den Dokumenten DE 10 2017 002 263 A1, US 3 504 934 A und DE 10 2010 009 866 A1 beschrieben.

Die gattungsgemäße WO 2018/172784 A1 betrifft ein Dreirad mit einem Vorderrad und zwei Hinterrädern und zwei zueinander um eine Schwenkachse beweglich angeordnete Rahmenteilen, wobei ein Gehäuse der Vorrichtung zur Drehmomentübertragung gleichzeitig als Lagerstelle dient.

Die US 3 880 449 A betrifft ein Dreirad mit einem Vorderrad und zwei Hinterrädern, wobei die Konstruktion eine Art Knicklenkung bereitstellt.

Die CN 201 923 270 U offenbart ein Dreirad mit einem Vorderrad und zwei Hinterrädern. Eines der Hinterräder ist durch einen Motor angetrieben.

Die US 3 504 934 A offenbart ein Dreirad mit einem Vorderrad und zwei Hinterrädern. Das Dreirad kann motorisch betrieben sein, beispielsweise mittels eines Verbrennungsmotors, oder muskelbetrieben. Ein Vorderteil und ein Hinterteil des Rahmens sind gegeneinander verschwenkbar.

Die US 2007/152422 A1 betrifft ein Dreirad mit einem Vorderrad und zwei Hinterrädern, wobei ein vorderer Rahmenteil entlang einer horizontal ausgerichteten Achse gegenüber dem Hinterteil verschwenkbar ist.

Die DE 41 24 926 A1 betrifft ein Dreirad, bestehend aus zwei Hinterrädern, einem Rahmen, der die Hinterräder hält, einem Gestell mit einem Sattel, das mit dem Rahmen verbunden ist, einem Vorderrad, das zusammen mit einem Lenker um eine etwa vertikale Achse schwenkbar in dem Gestell gelagert ist, und einem Antrieb für die Hinterräder.

Die WO 2006/006859 A2 beschreibt ein dreirädriges Fahrzeug mit einem Sitz und einem Lenkrad, welches eine Neigefunktion bereitstellt.

Allerdings führt das Schwenken bei den bekannten Lösungen durch den jeweiligen Aufbau dazu, dass an dem Vorderrad beim Neigen in die Kurve seitliche Kräfte angreifen können, durch welche das Vorderrad aus seiner Bahn gelenkt wird, so dass es gegenüber seiner vorherigen Spur relativ zu dem Radpaar an der Hinterachse (den Hinterrädern) versetzt wird, was das Lenkverhalten negativ beeinflusst.

Zudem wird durch das Schwenken oftmals eine Hebelwirkung auf das Vorderrad erzeugt, durch welche dieses bei Kurvenfahrten nach unten gedrückt wird, was die Wahrscheinlichkeit, dass der Rahmen bzw. der schwenkbare vordere Teil des Rahmens umkippt, erhöht. Diese Hebelwirkung bzw. die durch die Hebelwirkung verursachte Kraft ist zudem von der Zuladung abhängig, so dass sich das Verhalten des Fahrzeugs abhängig von der Zuladung bzw. abhängig von den bewegten Massen stark ändern kann, was das Fahrzeug zusätzlich unberechenbar macht.

Eine die Hebelwirkung reduzierende Ausrichtung einer Schwenkachse ist in der GB 2 560 760 A gezeigt, die hierzu in Richtung eines Aufstandspunktes eines Vorderrades geneigt ist. Diese Ausführung umfasst einen aufwendigen Antriebsstrang unter Verwendung einer teuren und zudem schweren Kardanwelle zum Übertragen eines Drehmoments auf die anzutreibenden Hinterräder.

Der Erfindung liegt deshalb die Aufgabe zugrunde, die vorgenannten Nachteile des Stands der Technik zu überwinden und ein dreirädriges Fahrzeug bereitzustellen, welches einerseits ein Fahrverhalten ähnlich einem herkömmlichen Fahrrad aufweist und ein Neigen in eine Kurve ermöglicht, und dennoch einen möglichst leichten, kostengünstigen und dennoch haltbaren Antriebsstrang bietet, der trotz der Kurvenneigung einen möglichst geringen Verschleiß sicherstellt.

Diese Aufgabe wird durch die Merkmalskombination gemäß Patentanspruch 1 gelöst.

Erfindungsgemäß wird ein Fahrzeug bzw. insbesondere ein Lastenrad vorgeschlagen, welches einen mehrteiligen und vorzugsweise zweiteiligen Rahmen, ein Einzelrad und ein Radpaar aufweist. Als ein solches durch das Einzelrad und das Radpaar dreirädriges Fahrzeug werden, neben einem rein durch Muskelkraft betriebenen Lastenrad, unter anderem auch dreirädrige E-Bikes, oder Hybrid-Lösungen verstanden. Als Einzelrad wird insbesondere ein einzelnes Rad verstanden, wobei auch mehrere als im Wesentlichen ein Rad wirkendende Räder ein Einzelrad darstellen können, was beispielsweise der Fall ist, wenn diese als Zwillingsrad ausgeführt sind oder der Abstand zwischen den Rad- bzw. Reifenaufstandsflächen sehr gering und beispielsweise unter 5 cm ist. Das Radpaar weist zwei insbesondere in eine Querrichtung des Fahrzeugs zueinander beabstandete Räder auf. Das Einzelrad ist mit einem ersten Rahmenteil des mehrteiligen Rahmens verbunden und die zwei Räder des Radpaares sind an einem zweiten Rahmenteil des Rahmens um eine gemeinsame Achse, beispielsweise eine Hinterachse des Fahrzeugs, rotierbar gelagert. Die gemeinsame Achse kann als reale Achse, also als durchgehende Welle oder mittels Gelenkwellen realisiert werden, oder als virtuelle gemeinsame Achse, also als gedachte Achse, zu der die beiden Wellen der beiden Räder des Radpaares jeweils koaxial angeordnet sind.

Die Verbindung des Einzelrades mit dem ersten Rahmenteils wird vorzugsweise über ein Zwischenelement, wie beispielsweise eine Radgabel, ausgeführt, so dass das Einzelrad insbesondere als Vorderrad und um eine Lenkachse schwenkbar mittels der Radgabel an dem ersten Rahmenteil fixiert ist. Entsprechend ist das Einzelrad dem ersten Rahmenteil und das Radpaar dem zweiten Rahmenteil zugeordnet.

Weiter ist vorgesehen, dass der erste Rahmenteil und der zweite Rahmenteil durch zumindest ein Gelenk verbunden und gegeneinander um eine durch das zumindest eine Gelenk bestimmte Schwenkachse drehbar bzw. verdrehbar oder schwenkbar sind, so dass sich also der erste Rahmenteil relativ zu dem zweiten Rahmenteil um die Schwenkachse bewegen lässt. Die Schwenkachse verläuft hierbei durch einen Aufstandspunkt des Einzelrades.

Außerdem weist das Fahrzeug zumindest eine ein Drehmoment erzeugende erste Antriebsvorrichtung auf, welche an dem ersten Rahmenteil angeordnet und ausgebildet ist, das Drehmoment über eine Vorrichtung zur Drehmomentübertragung auf zumindest eines der beiden Räder des Radpaares zu übertragen. Die Vorrichtung zur Drehmomentübertragung umfasst eine Ausgleichsvorrichtung zum Ausgleich einer durch die Drehung des ersten Rahmenteils gegenüber dem zweiten Rahmenteil um die Schwenkachse bewirkten Verwindung (im Folgenden auch als Torsion bezeichnet) der Vorrichtung zur Drehmomentübertragung.

Da Räder allenfalls in einem in der Realität nicht vorhandenen Idealfall nur an einem einzelnen eindimensionalen Punkt auf einem Untergrund bzw. der Fahrbahn aufstehen, wird als Aufstandspunkt, welcher auch als Radaufstandspunkt bezeichnet werden kann, nicht lediglich ein eindimensionaler Punkt sondern vielmehr auch die Aufstandsfläche bzw. ein innerhalb der Aufstandsfläche liegender idealisierter Aufstandspunkt des Einzelrades auf einer Fahrbahn bzw. einem Untergrund verstanden.

Dadurch, dass die Schwenkachse durch den Aufstandspunkt verläuft, findet ein Drehen des Einzelrades bei einem Verschwenken der Rahmenteile um den Aufstandspunkt statt, so dass es nicht zu einem Spurversatz und nicht zu einem Hebelmoment kommt. Dadurch wird beispielsweise auch ein freihändiges Fahren möglich. Durch den mit der Schwenkachse entkoppelten Hinterbau bzw. hinteren oder zweiten Rahmenteil wird das Gewicht einer auf dem zweiten Rahmenteil lastenden Ladung weder gelenkt noch in die Kurve geneigt, so dass diese Massen nicht als bewegte Masse wirken und das Verhalten des vorderen bzw. ersten Rahmenteils bzw. das Fahrverhalten des Fahrzeugs nicht negativ beeinflussen.

Gemäß einer bevorzugten Ausführungsform verläuft die Schwenkachse in einer Symmetrieebene des Fahrzeugs bzw. in einer Symmetrieebene des Rahmens oder zumindest des ersten Rahmenteils.

Wie voranstehend beschrieben, umfasst das Fahrzeug die ein Drehmoment erzeugende erste Antriebsvorrichtung. Bei dieser kann es sich um einen Motor und/oder auch eine Vorrichtung zum Antrieb mit Muskelkraft handeln. Die erste Antriebsvorrichtung ist an dem ersten Rahmenteil angeordnet und ausgebildet, das Drehmoment über die Vorrichtung zur Drehmomentübertragung auf zumindest eines der Räder des Radpaares zu übertragen, die dem zweiten Rahmenteil zugeordnet sind. Optional kann die erste Antriebsvorrichtung ein integriertes Getriebe aufweisen, beispielsweise als Motor mit integriertem Getriebe ausgebildet sein.

Es ist also vorgesehen, dass die Drehmomentübertragung durch die entsprechende Vorrichtung zur Drehmomentübertragung über eine Teilungsebene des Fahrzeugs zwischen den beiden Rahmenteilen hinweg erfolgt, wobei die Vorrichtung zur Drehmomentübertragung vorzugsweise ausgebildet ist, ein Verschwenken bzw. Verdrehen der Rahmenteile um die Schwenkachse ohne Schaden zu nehmen zuzulassen.

Vorzugsweise umfasst die Vorrichtung zur Drehmomentübertragung mindestens ein Zugmittel.

Zum Beispiel kann die Vorrichtung zur Drehmomentübertragung als Zugmittel ein zumindest eine Kette aufweisendes Kettengetriebe umfassen, dessen Kette die Verwindung um die Schwenkachse zulässt und ausgleicht bzw. dessen Kette ausgebildet ist, die Verwindung um die Schwenkachse zumindest innerhalb eines vorbestimmten Bereichs zuzulassen und auszugleichen. Hierfür kann lediglich optional eine Kettenführung und/oder ein Kettenspanner vorgesehen sein, durch welche sichergestellt wird, dass die Kette bei dem Verschwenken der Rahmenteile nicht von den zugehörigen Ritzeln springt.

Zum Ausgleich der Verwindung ist insbesondere die Ausgleichsvorrichtung vorgesehen. Diese ist derart ausgebildet, dass die Verwindung teilweise oder vollständig mechanisch ausgeglichen werden kann und ein ansonsten erhöhter Verschleiß des Kettengetriebes aufgrund von übermäßiger Reibung dementsprechend reduziert und minimiert wird.

Beispielsweise kann die mechanische Kraftübertragung bzw. die Drehmomentübertragung kraftoptimiert, leicht und preiswert mittels einer Fahrradkette erfolgen, welche eine Torsion zwischen einem vorderen Kettenblatt am ersten Rahmenteil und einem hinteren Ritzel am zweiten Rahmenteil von mindestens 45° ermöglicht und nur am vorderen Kettenblatt und am hinteren Ritzel jeweils oben und unten geführt werden muss, um ein Abspringen zu verhindern.

Alternativ zu dem beschriebenen Kettengetriebe kann die Vorrichtung zur Drehmomentübertragung als Zugmittel auch einen Riementrieb, insbesondere einen Zahnriementrieb, umfassen. Diese ist analog zum Kettengetriebe ausgebildet. Zum Ausgleichen der Verwindung ist auch in diesem Fall die Ausgleichsvorrichtung vorgesehen, so dass ein Verschleiß des Riementriebs aufgrund von übermäßiger Reibung in Folge der Verwindung wieder reduziert und minimiert werden kann.

Zum Beispiel kann die Ausgleichsvorrichtung ein Gleichlaufgelenk umfassen. Das Gleichlaufgelenk kann dem ersten Rahmenteil oder dem zweiten Rahmenteil zugeordnet sein.

Das Gleichlaufgelenk kann derart ausgebildet sein, dass sich ein an dem Gelichlaufgelenk antriebsseitig vorgesehenes Ritzel, beispielsweise das hintere Ritzel des Kettengetriebes oder des Riementriebs, gegenüber einer Abtriebsachse des Gleichlaufgelenks kippen, insbesondere seitlich in Querrichtung des Fahrzeugs kippen, lässt.

Zum Beispiel kann ein Gehäuse des Gleichlaufgelenks starr mit dem ersten Rahmenteil verbunden oder zumindest an dem ersten Rahmenteil gelagert sein, so dass das Gehäuse zusammen mit dem ersten Rahmenteil gekippt wird. Alternativ kann das Gehäuse des Gleichlaufgelenks schwimmend auf der Abtriebsachse positioniert sein, so dass das Gehäuse gegenüber der Abtriebsachse gekippt werden kann, beispielsweise gemeinsam mit dem Ritzel, welches das Gehäuse beim Kippen mitbewegt. Optional können ein oder mehrere Abstützelemente, insbesondere Hilfsarme, des ersten Rahmenteils vorgesehen sein, die bei einer Schwenkbewegung des ersten Rahmenteils das Gehäuse des Gleichlaufgelenks beaufschlagen und in eine gekippte Position zu bewegen.

In jedem dieser Fälle kann die Abtriebsachse des Gleichlaufgelenks vorzugsweise von der Hinterachse des Fahrzeugs gebildet oder zumindest mit dieser drehmomentübertragend gekoppelt sein. Die Abtriebsachse beziehungsweise die Hinterachse ist in diesem Fall zwar drehbeweglich an dem zweiten Rahmenteil gelagert, eine relative Verschwenkung gegenüber dem zweiten Rahmenteil aufgrund der Schwenkbewegung der Rahmenteile zueinander wird durch eine entsprechende feste Lagerung verhindert. Folglich wird die Abtriebsachse also nicht verschwenkt.

Mit Hilfe des dadurch bereitgestellten Freiheitsgrads kann das Gleichlaufgelenk eine Schwenkbewegung der sonstigen Vorrichtung zur Drehmomentübertragung gegenüber dem zweiten Rahmenteil ausgleichen, welches die Vorrichtung zur Drehmomentübertragung aufgrund ihrer Verbindung mit dem ersten Rahmenteil erfährt, wenn das erste Rahmenteil gegenüber dem zweiten Rahmenteil um die Schwenkachse geschwenkt wird.

Gemäß einer bevorzugten Ausführungsform kann das Gleichlaufgelenk mittig zwischen den beiden Rädern des Radpaares angeordnet sein, also beispielsweise auf der Symmetrieebene des Fahrzeugs.

Alternativ zu dem Gleichlaufgelenk kann die Ausgleichsvorrichtung ein Differential mit zumindest einer Gelenkwelle umfassen, wobei das Differential über die zumindest eine Gelenkwelle das über die Vorrichtung zur Drehmomentübertragung auf das Differential eingeleitete Drehmoment auf das zumindest eine Rad des Radpaares überträgt. Vorzugsweise ist das Differential dem ersten Rahmenteil zugeordnet, so dass dieses gemeinsam mit dem ersten Rahmenteil um die Schwenkachse geschwenkt wird, wenn das erste Rahmenteil gegenüber dem zweiten Rahmenteil um die Schwenkachse geschwenkt wird. Zum Ausgleich der dadurch bewirkten Relativbewegung des Differentials gegenüber dem zweiten Rahmenteil, ist das Differential abtriebseitig mit der zumindest einen Gelenkwelle zum Antrieb des zumindest einen anzutreibenden Rades des Radpaares verbunden.

Sollen beide Räder des Radpaares angetrieben werden, so kann die Ausgleichsvorrichtung zwei Gelenkwellen umfassen, wobei jeweils eine der beiden Gelenkwellen jeweils eines der beiden anzutreibenden Räder mit jeweils einer Abtriebseite des Differentials drehmomentübertragend verbindet. Aufgrund der durch die Gelenkwellen geschaffenen Freiheitsgrade, kann ein Ausgleich der Schwenkbewegung beziehungsweise ein Neigungsausgleich bereitgestellt werden. Zusätzlich bietet diese Ausführungsform die optionale Möglichkeit eine Federung, insbesondere eine Einzelradfederung, für jedes der beiden Räder des Radpaares vorzusehen.

Gemäß einer bevorzugten Ausführungsform kann das Differential mittig zwischen den beiden Rädern des Radpaares angeordnet sein, also beispielsweise auf der Symmetrieebene des Fahrzeugs.

Vorzugsweise sind die Schwenkachse und die Ausgleichsvorrichtung derart zueinander ausgerichtet, dass die Schwenkachse zumindest in einer Seitenansicht des Fahrzeugs in Richtung der Ausgleichsvorrichtung weist. Mit anderen Worten dargestellt, schneidet die Schwenkachse beziehungsweise dessen gedachte Verlängerung die Ausgleichsvorrichtung derart, dass zumindest in der Seitenansicht des Fahrzeugs die Schwenkachse durch die Ausgleichsvorrichtung verläuft.

Vorzugsweise schneidet die Schwenkachse beziehungsweise dessen gedachte Verlängerung die Ausgleichsvorrichtung tatsächlich, so dass die Schwenkachse unabhängig von der Blickrichtung durch die Ausgleichsvorrichtung verläuft beziehungsweise diese schneidet.

In jedem Fall ist der (lediglich in der Seitenansicht oder der tatsächlich) entstehende Schnittpunkt nicht als einzelner eindimensionaler Punkt im Zentrum der Ausgleichsvorrichtung zu verstehen, vielmehr soll der Schnittpunkt lediglich innerhalb der Ausgleichsvorrichtung liegen. Zum Beispiel kann hierzu die Schwenkachse ein Gehäuse der als Gleichlaufgelenk oder als Differential ausgebildeten Ausgleichsvorrichtung schneiden.

Grundsätzlich bietet die beschriebene Anordnung von Schwenkachse und Ausgleichsvorrichtung den Vorteil, dass eine Torsion sowie eine eventuelle Längenänderung der Vorrichtung zur Drehmomentübertragung in besonders wirkungsvoller Art und Weise reduziert oder sogar vermieden werden kann. Entsprechend kann ein ansonsten durch die Torsion induzierter Verschleiß noch weiter reduziert werden. Zudem kann bei Bedarf auf zusätzliche Spannelemente der Vorrichtung zur Drehmomentübertragung verzichtet werden.

Ist die Schwenkachse - wie voranstehend beschrieben - in der Symmetrieebene des Fahrzeugs bzw. in einer Symmetrieebene des Rahmens oder zumindest des ersten Rahmenteils angeordnet, so kann die Ausgleichsvorrichtung vorzugsweise ebenfalls in dieser Symmetrieebene angeordnet sein.

Wie zuvor erwähnt, handelt es sich bei dem Einzelrad vorzugsweise um ein Vorderrad, welches an einer Radgabel um eine Lenkachse schwenkbar mit dem ersten Rahmenteil verbunden ist. Entsprechend bilden die Räder des Radpaares die Hinterräder des Fahrzeugs. Da der Aufstandspunkt den niedrigsten Punkt des Einzelrades bzw. Vorderrades bildet, fällt die Schwenkachse vom Heck des Fahrzeugs her in Richtung des Vorderrades ab.

Eine vorteilhafte Weiterbildung sieht vor, dass der erste Rahmenteil und der zweite Rahmenteil durch zumindest zwei Gelenke verbunden sind, welche beabstandet zueinander auf der Schwenkachse angeordnet sind. Obgleich die Rahmenteile vorzugsweise ausschließlich durch die Gelenke verbunden sind, können sich Mittel zur Drehmomentübertragung oder zur Steuerung, wie beispielsweise Ketten, Bremsseile, elektrische Leitungen oder dergleichen, zwischen den Rahmenteilen erstrecken. Ein erstes Gelenk der zwei Gelenke ist ein Kugelgelenk, ein Radiallager oder ein insbesondere flexibel und reversibel verformbares Elastomerelement. Ferner ist ein zweites Gelenk der zwei Gelenke ein Kugelgelenk, ein Radiallager oder ein ebenfalls insbesondere flexibel und reversibel verformbares Elastomerelement. Dadurch ergeben sich verschiedene vorteilhafte Kombinationen. Beispielsweise kann das erste und zweite Gelenk jeweils ein Kugelgelenk, jeweils ein Radiallager oder jeweils ein Elastomerelement sein, wobei auch Mischformen möglich sind, bei welchen beispielsweise das erste Gelenk ein Elastomerelement und das zweite Gelenk ein Kugelgelenk ist. Elastomerelemente haben zudem den Vorteil, dass diese nicht nur ein Verschwenken erlauben, sondern zugleich auch Stöße und Schläge abfedern und weniger stark auf den Fahrzeugrahmen übertragen.

Um den Verlauf der Schwenkachse beispielsweise bei einem Radwechsel des Einzelrades oder jeder anderen den Aufstandspunkt gegenüber der Schwenkachse verschiebenden Situation einstellen zu können, ist bei einer besonders vorteilhaften Weiterbildung eine Position des ersten Gelenks und/oder des zweiten Gelenks gegenüber dem ersten Rahmenteil und/oder dem zweiten Rahmenteil einstellbar. Vorzugsweise ist die Position oder die jeweilige Position des Gelenks in Horizontal- bzw. auf das Fahrzeug bezogen in Hochrichtung und/oder in Vertikal- bzw. auf das Fahrzeug bezogen in Längsrichtung einstellbar, so dass durch eine entsprechende Einstellbarkeit der Position bzw. durch eine entsprechende Verschiebbarkeit der Gelenke die Schwenkachse in einen den Aufstandspunkt schneidenden Verlauf verschoben bzw. gedreht werden kann.

Die Einstellbarkeit des Verlaufs der Schwenkachse kann in ganz unterschiedlichen Situationen genutzt werden, die - wie voranstehend beschrieben - eine Verschiebung des Aufstandspunkt bewirken können. So können sich - je nach Ausgestaltung - beispielsweise vorteilhafte Nutzungsmöglichkeiten dieser Einstellbarkeit sowohl für den Kunden als auch im Rahmen einer Entwicklung und Herstellung des Fahrzeugs bieten. Bereits in der Auslegung des Fahrzeugs kann eine gleiche Rahmen- und Schwenkachsenanordnung für unterschiedliche Antriebskonzepte beziehungsweise Fahrzeugvarianten vorgesehen werden, da eine Justierung beziehungsweise Einstellung für die konkrete Variante des Antriebskonzepts mit Hilfe der Einstellbarkeit vorgenommen werden kann. So ist es beispielsweise möglich bei gleicher Rahmengeometrie unterschiedliche Ausgleichsvorrichtungen vorzusehen, wie beispielsweise ein Gleichlaufgelenk mit Starrachse oder alternativ ein Differential in Verbindung mit Gelenkwellen und Einzelrad-Federung, wobei die jeweils individuell korrekte Ausrichtung der Schwenkachse mittels der Einstellbarkeit sichergestellt werden kann.

Aber beispielsweise auch für einen Nutzer des Fahrzeugs bietet die Einstellbarkeit des Verlaufs der Schwenkachse besondere Vorteile, so kann der Verlauf der Schwenkachse bei einer (nachträglichen) Veränderung der Radgrößen und/oder einer Reifenart nachträglich eingestellt beziehungsweise nachjustiert werden. Beispielsweise kann sich der Bedarf einer geometrischen Nachjustierung bei einem Wechsel von Straßenreifen auf Offroad-Reifen oder umgekehrt ergeben, die im Gegensatz zu den Straßenreifen üblicherweise ein gröberes Profil aufweisen und gegebenenfalls einen größeren Reifendurchmesser bewirken können, und/oder aufgrund eines für die Einsatzumgebung gewählten Reifendrucks. Beispielsweise kann für einen Offroad-Betrieb ein deutlich niedrigerer Reifendruck erforderlich sein als bei einem reinen Straßenbetrieb, beispielsweise bei einer Nutzung in der Stadt.

Jedenfalls kann die Einstellbarkeit derart ausgeführt sein, dass diese durch den Kunden, eine Werkstatt oder den Hersteller vorgenommen werden kann, um die für die jeweilige Geometrie und den gewünschten Einsatzzweck erforderliche Justierung des Verlaufs der Schwenkachse vorzunehmen.

Zum Beispiel kann die Einstellbarkeit des ersten Gelenks und/oder des zweiten Gelenks in Hochrichtung (also in Fahrzeughöhenrichtung) und/oder in der Längsrichtung des Fahrzeugs beispielsweise über zumindest einen Gewindeabschnitt des Gelenks erfolgen, der eine Justierung ermöglicht. Zum Beispiel kann bei Verwendung eines Kugelgelenks ein Gewindeabschnitt am Kugelgelenk vorgesehen sein, der in eine fahrzeugseitige Aufnahme eingeschraubt wird und die Einstellbarkeit und damit die Position des Kugelkopfes über dessen Einschraubtiefe erzielt wird.

Des Weiteren kann das mindestens eine Gelenk unterhalb eines Lastenträgers angeordnet sein. Zum Beispiel kann der zweite Rahmenteil integral eine aus der Draufsicht (auf das Fahrzeug) im wesentlichen rechteckige Struktur umfassen, die als der Lastenträger ausgebildet ist.

In jedem Fall kann der Lastenträger dazu ausgebildet sein, dass auf diesem oder auf der den Lastenträger bildenden Struktur die durch das Lastenrad zu transportierenden Lasten unmittelbar oder beispielsweise über eine nicht dargestellte Aufnahme, wie eine Plattform (auch als Ladefläche bezeichnet), einen Korb oder Sitze, an dem zweiten Rahmenteil angeordnet werden können.

Mit anderen Worten beschrieben, wird das zumindest eine Gelenk in einer Draufsicht auf das Fahrzeug von dem Lastenträger verdeckt oder umschlossen beziehungsweise liegt das zumindest eine Gelenk im Bereich einer Projektionsfläche des Lastenträgers (bei senkrecht nach unten gerichteter Projektionsrichtung).

Hierbei kann der Lastenträger beispielsweise starr am zweiten Rahmenteil vorgesehen sein. Anschaulich dargestellt, befindet sich also zumindest in einer Seitenansicht des Fahrzeugs das mindestens eine Gelenk unterhalb des Lastenträgers.

Sind gemäß einer beispielhaften Ausführungsform zumindest zwei Gelenke vorgesehen, so können beispielsweise beide Gelenke unterhalb des Lastenträgers angeordnet sein. Vorzugsweise kann das erste und das zweite Gelenk in Längsrichtung des Fahrzeugs vor der Hinterachse angeordnet sein. Alternativ kann das erste Gelenk in Längsrichtung des Fahrzeugs vor der Hinterachse und das zweite Gelenk hinter der Hinterachse angeordnet sein.

Grundsätzlich kann also die Schwenkachse - wie voranstehend beschrieben - durch zumindest zwei voneinander getrennt liegende Gelenke virtuell definiert werden. Zwar können die Gelenke je nach Konstruktion, frei wählbar entlang der Schwenkachse X platziert und der Winkel der Schwenkachse X über die Position der beiden Gelenke frei definiert werden. Je weiter die beiden Gelenke auseinanderliegen, desto besser ist die Abstützung des zweiten Rahmenteils auf das erste Rahmenteil 1, insbesondere bei einer Krafteinwirkung, beispielsweise durch Schläge, Schlaglöcher oder Rempler gegen das hintere, zweite Rahmenteil. Die Gelenke werden somit auch weniger stark beansprucht.

Bei einer Positionierung unterhalb des Lastenträgers können vorzugsweise die beiden Gelenke im Bereich eines vorderen und eines hinteren Endes des Lastenträgers angeordnet sein, um bei möglichst langem Abstand zueinander noch vertikale Kräfte zwischen dem ersten und zweiten Rahmenteil zueinander optimal abzustützen. Durch den möglichst großen Abstand der beiden getrennten Gelenke entsteht in deren Zwischenraum entlang der virtuellen Schwenkachse unterhalb des Lastenträgers ein Bauraum der zur freien Verfügung steht. Es können in diesem Bereich zum Beispiel Rahmenbauteile des ersten und/oder zweiten Rahmenteils untergebracht werden, und/oder auch Komponenten der Vorrichtung zur Drehmomentübertragung.

Alternativ zu einer zwei bzw. zumindest zwei Gelenke aufweisenden Ausführung ist ebenso eine Variante vorteilhaft, bei welcher der erste Rahmenteil und der zweite Rahmenteil durch genau ein durch zumindest ein Radiallager gebildetes Gelenk verbunden sind. Obgleich in dem vorzugsweise genau einem Gelenk mehrere Radiallager und/oder Axiallager angeordnet sein können, zeichnet es sich dadurch aus, dass das Gelenk eine einzelne und vorzugsweise gekapselte Baugruppe bildet. Dadurch liegen die Lager des Gelenks zwar vergleichsweise nah beieinander, so dass die Kräfte nicht optimal abgestützt werden können, jedoch ergeben sich durch die bessere Kapselung andere Vorteile, wie beispielsweise ein besserer Schutz vor Verschmutzung, ein kompakterer Aufbau und eine einfachere Montierbarkeit.

Um den Winkel bei einem einzelnen ein Schwenken um die Schwenkachse erlaubenden Gelenk und dadurch den Verlauf der Schwenkachse durch den Aufstandspunkt einstellen zu können, ist ferner vorzugsweise vorgesehen, dass der Winkel des einzelnen Gelenks gegenüber dem ersten Rahmenteil und/oder dem zweiten Rahmenteil einstellbar ist, also das Gelenk selbst oder das Gelenk durch eine entsprechende Vorrichtung ausgebildet ist, um eine Querachse des Fahrzeugs verdreht zu werden.

Um ein Umfallen des Fahrzeugs bzw. des ersten Rahmenteils im Stillstand oder eine gefährliche Neigung des ersten Rahmenteils gegenüber dem zweiten Rahmenteil während der Fahrt zu verhindern, sieht eine weitere Ausgestaltung vor, dass das Fahrzeug ferner eine Begrenzungsvorrichtung umfasst, welche ausgebildet ist, eine Verdrehbarkeit des ersten Rahmenteils gegenüber dem zweiten Rahmenteil um die Schwenkachse zu begrenzen bzw. auf einen vorbestimmten Winkelbereich zu beschränken. Eine solche Begrenzungsvorrichtung kann beispielsweise auch ein einfacher Ständer sein, welcher im Stillstand des Fahrzeugs ausgeklappt werden kann und den ersten Rahmenteil gegen den Boden stützt. Alternativ kommt ebenso eine Fixiervorrichtung in Frage, welche beim Stillstand des Fahrzeugs den ersten Rahmenteil mit dem zweiten Rahmenteil starr verbindend angeordnet werden kann, so dass sich die Rahmenteile im Stillstand nicht mehr gegeneinander verdrehen bzw. verschwenken können. Neben solchen nur für den Stillstand geeigneten Vorrichtungen kommen auch weitere Alternativen in Frage, welche eine Verdrehbarkeit der Gelenke einschränken und dadurch auch eine Verschwenkung der Rahmenteile begrenzen.

Eine weitere alternative Ausgestaltung sieht vor, dass das Fahrzeug ferner eine Rückstellvorrichtung umfasst, welche ausgebildet ist, das erste Rahmenteil aus einer gegenüber einer vorbestimmten Mittelstellung ausgelenkten Stellung zurück in die Mittelstellung zu drehen bzw. zu schwenken. Die Mittelstellung entspricht dabei vorzugsweise einer Ruhestellung, in welcher sich der erste Rahmenteil und der zweite Rahmenteil bei einer ungelenkten Geradeausfahrt befinden bzw. jeweils vollständig aufgerichtet sind. Eine solche Rückstellvorrichtung kann beispielsweise durch Federn oder auch Gasdruckfedern realisiert sein. Insbesondere wenn ein Elastomerelement als eines der Gelenke vorgesehen ist, kann das Elastomerelement integral die Begrenzungsvorrichtung und/oder die Rückstellvorrichtung bilden. Eine solche Rückstellvorrichtung kann zudem eine Begrenzungsvorrichtung ergänzen oder vollständig ersetzen, da die Rückstellvorrichtung ein Rückstellmoment erzeugt, durch welches der Rahmen bzw. die Rahmenteile auch im Stillstand zueinander ausgerichtet werden.

Vorzugsweise weist das Fahrzeug ferner zumindest eine weitere, zweite ein Drehmoment erzeugende Antriebsvorrichtung auf, bei welcher es sich beispielsweise um einen Motor oder um ein mit Muskelkraft betriebenes Pedalwerk handelt. Die zweite Antriebsvorrichtung ist an dem ersten Rahmenteil oder unmittelbar an dem Einzelrad angeordnet und ausgebildet, das Drehmoment auf das Einzelrad zu übertragen. Beispielsweise kann der Motor der zweiten Antriebsvorrichtung für das Einzelrad ein Radnabenmotor sein, der dem Einzelrad zugeordnet ist.

Alternativ ist die zweite Antriebsvorrichtung an dem zweiten Rahmenteil oder unmittelbar an einem der Räder des Radpaares angeordnet und ausgebildet, das Drehmoment auf zumindest eines der Räder des Radpaares zu übertragen. Entsprechend sehen die Varianten vor, dass die Drehmomentübertragung von der zweiten Antriebsvorrichtung auf das jeweils angetriebene Rad oder das jeweils angetriebene Radpaar nicht über die Teilungsebene zwischen den Rahmenteilen erfolgt, sondern direkt im Bereich eines der Rahmenteile. Eine solche zweite Antriebsvorrichtung kann zudem auch beispielsweise als Radnabenmotor vorgesehen sein, so dass die zweite Antriebsvorrichtung auch beispielsweise unmittelbar in einer Radnabe des Einzelrades oder in eines der Räder des Radpaares angeordnet sein kann. Dies bedeutet selbstverständlich auch, dass jedem der beiden Räder des Radpaares jeweils ein Radnabenmotor zugeordnet sein kann. Sollen die Hinterräder bzw. die Räder des Radpaares angetrieben werden, kann die zweite Antriebsvorrichtung als zentraler Heck- oder Mittelmotor ausgebildet sein, wobei das Drehmoment zwischen den Rädern des Radpaares über eine Vorrichtung zur Drehmomentverteilung aufgeteilt und gesteuert werden kann (Torque-Vectoring).

Eine weitere Variante sieht vor, dass eine Antriebsvorrichtung sowohl das Einzelrad als auch zumindest eines der Räder des Radpaares antreibt, wobei dann die Drehmomentübertragung mittels zumindest einer dafür geeigneten Vorrichtung erfolgt.

Das Fahrzeug kann auch mit einem seriellen Hybridantrieb versehen sein, bei welchem beispielsweise ein durch Muskelkraft getriebener Generator Strom erzeugt, welcher mittels entsprechender Leitungen über die Teilungsebene zwischen den Rahmenteilen hinweg auf eine elektrische Antriebsvorrichtung übertragen wird, welche zumindest eines der Räder antreibt.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1a, 1b: eine erste Fahrzeugvariante aus Seiten- und Draufsicht;
- Fig. 2a, 2b: eine zweite Fahrzeugvariante aus Seiten- und Draufsicht;
- Fig. 3a: eine Ansicht eines Einzelrades in Mittelstellung und ausgelenkten Stellungen einer erfindungsgemäßen Fahrzeugvariante;
- Fig. 3b: eine Ansicht eines Einzelrades in Mittelstellung und ausgelenkten Stellungen eines Fahrzeugs des Stands der Technik;
- Fig. 4a-b: jeweils eine Antriebskonfiguration einer Fahrzeugvariante,
- Fig. 5a-d: jeweils eine Antriebskonfiguration weiterer Fahrzeugvarianten,
- Fig. 6a, 6b: eine dritte Fahrzeugvariante in Seiten - und Draufsicht.

Die Figuren sind beispielhaft schematisch. Gleiche Bezugszeichen in den Figuren weisen auf gleiche funktionale und/oder strukturelle Merkmale hin.

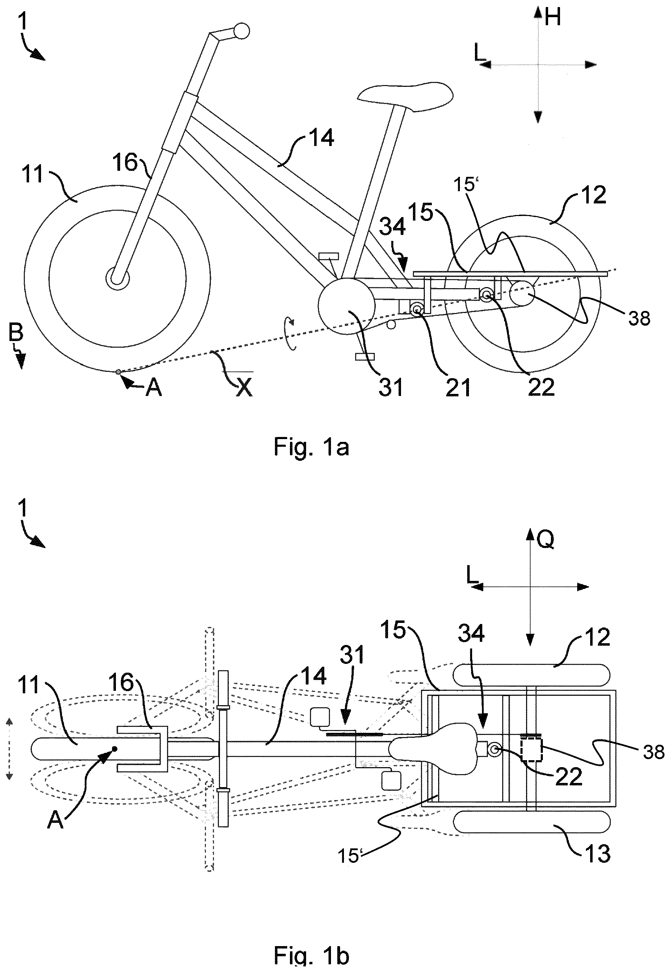

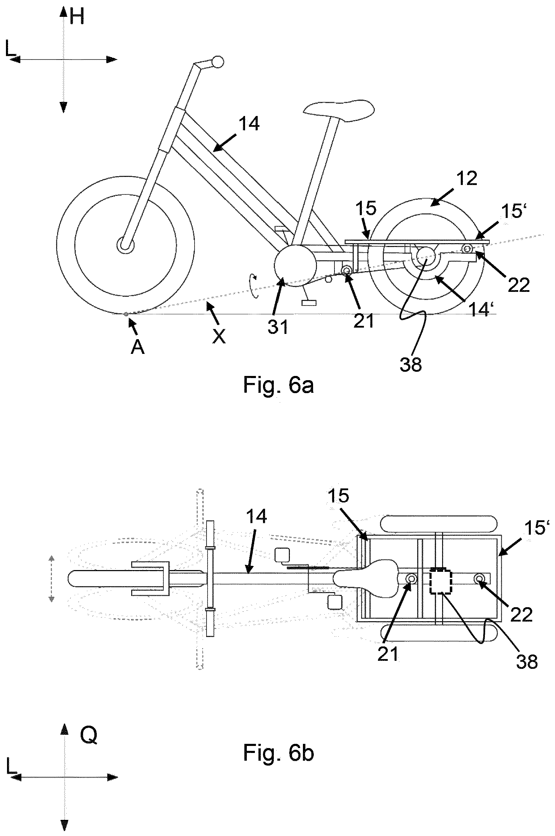

Die Figuren 1a bis 2b zeigen zwei Varianten eines erfindungsgemäß ausgeführten Fahrzeugs 1 jeweils aus einer Seitenansicht und einer Drauf- bzw. Aufsicht. Zusätzlich zeigen die Figuren 6a und 6b eine dritte Variante.

Die Fahrzeugvarianten verwenden jeweils unterschiedliche Gelenke 21, 22, 23 zur Ausbildung einer Schwenkachse X, um welche ein erster Rahmenteil 14 gegenüber einem zweiten Rahmenteil 15 eines Fahrzeugrahmens verschwenkbar ist, wobei die Schwenkachse X jeweils durch einen Aufstandspunkt A des als Vorderrad ausgebildeten Einzelrades 11 auf bzw. mit dem Boden B verläuft.

Da das Gelenk 23 bzw. die Gelenke 21, 22 jeweils in einem Heckbereich bzw. an einem hinteren Bereich des Fahrzeugs 1 angeordnet sind und eine Trennungs- oder Teilungsebene zwischen dem ersten bzw. vorderen Rahmenteil 14 und dem zweiten bzw. hinteren Rahmenteil 15 bestimmen, ergibt sich dadurch ein von hinten nach vorne abfallender und den Aufstandspunkt A des Einzelrades 11 durschneidender Verlauf der Schwenkachse X.

Zur besseren Orientierung in den Figuren ist in allen Figuren ein Koordinaten- bzw. Achsensystem dargestellt, welches die jeweiligen Achsen bezeichnet. Das sich auf das Fahrzeug beziehende Koordinatensystem definiert die Längsachse L des Fahrzeugs, die Hochachse H des Fahrzeugs und die Querachse Q des Fahrzeugs.

Da in den Figuren 1a bis 2b sowie 6a und 6b jeweils ein Lastenrad als beispielhafte Ausführung eines erfindungsgemäßen Fahrzeugs 1 dargestellt ist, ist das Vorderrad bzw. das Einzelrad 11 jeweils an einer Radgabel 16 gelagert und durch die Radgabel 16 um eine Lenkachse drehbar mit dem ersten bzw. vorderen Rahmenteil 14 verbunden. Zur Vereinfachung kann die Radgabel 16 als Teil des ersten Rahmenteils 14 gesehen werden.

Zum Antrieb des Fahrzeugs 1 ist in den Figuren 1a bis 2b sowie 6a und 6b jeweils ein Pedaltrieb bzw. Pedalwerk als Antriebsvorrichtung 31 vorgesehen, wie sie auch von herkömmlichen Fahrrädern bekannt ist. Entsprechend kann beispielsweise auch eine Gangschaltung vorgesehen sein. Zur Übertragung eines Drehmoments von der mit Muskelkraft betriebenen Antriebsvorrichtung 31 auf zumindest eines der Räder 11, 12, 13 ist vorliegend eine als Kettentrieb bzw. Kettengetriebe ausgebildete Vorrichtung zur Drehmomentübertragung 34 vorgesehen, so dass also das Drehmoment von der Antriebsvorrichtung 31 mittels einer über Ritzel laufenden Kette auf eine zwischen den Rädern 12, 13 des Radpaares laufende Achse, der Hinterachse, übertragen wird, durch welche bei den in den Figuren 1a bis 2b sowie 6a und 6b dargestellten Beispielen die Hinterräder, also die Räder 12, 13 des Radpaares gleichermaßen angetrieben werden.

Da bei den Varianten gemäß den Figuren 1a bis 2b sowie 6a und 6b eine die Teilungsebene zwischen den Rahmenteilen 14 ,15 überspannende Kette vorgesehen ist, ist ferner ein (lediglich optionaler) Kettenspanner in den Figuren gezeigt, durch welchen eine vorbestimmte bzw. ausreichende Kettenspannung auch bei einer Torsion der Kette beim Verkippen der Rahmenteile 14 ,15 aufrecht erhalten wird. Vorzugsweise kann zudem eine Führungseinrichtung zur Führung der Kette vorgesehen sein.

Des Weiteren umfasst die Vorrichtung zur Drehmomentübertragung 34 eine Ausgleichsvorrichtung 38 zum Ausgleich einer durch die Drehung des ersten Rahmenteils 14 gegenüber dem zweiten Rahmenteil 15 um die Schwenkachse X bewirkten Torsion der Vorrichtung zur Drehmomentübertragung 34.

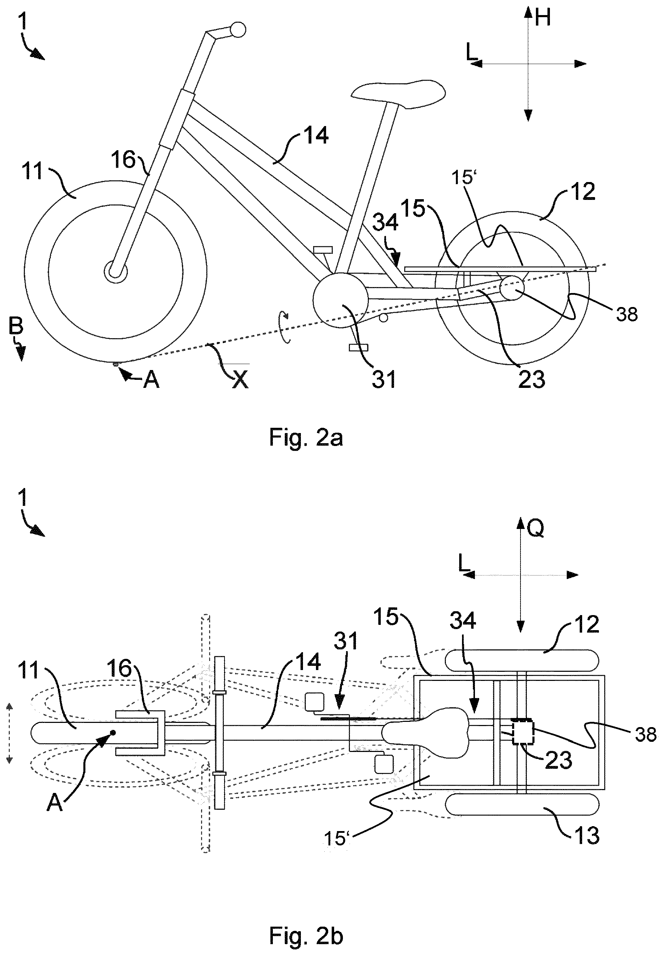

Gemäß den Fig. 1a und 2a sind die Schwenkachse X und die Ausgleichsvorrichtung 38 derart zueinander ausgerichtet, dass die Schwenkachse X zumindest in einer Seitenansicht des Fahrzeugs gemäß den Fig. 1a und 2a sowie 6a und 6b in Richtung der Ausgleichsvorrichtung 38 weist.

Wie in den Draufsichten in Fig. 1b und 2b sowie 6b ersichtlich, schneidet die Schwenkachse X die Ausgleichsvorrichtung 38 aufgrund ihrer in Längsrichtung L fluchtenden Anordnung tatsächlich, also nicht nur in der Seitenansicht.

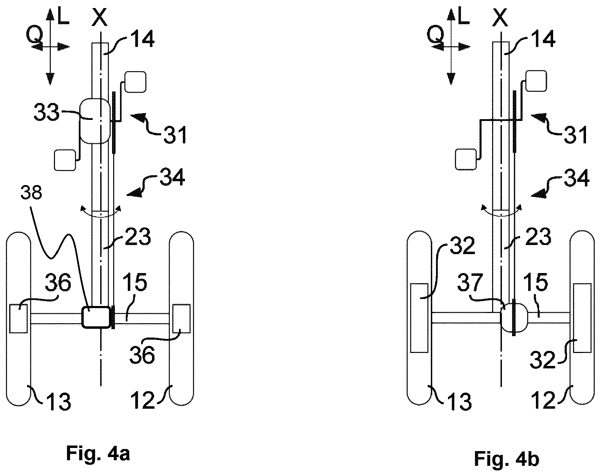

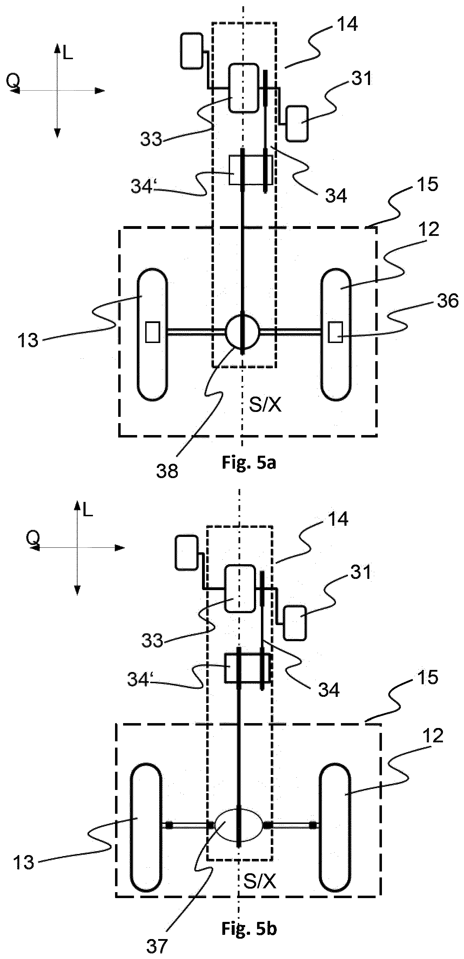

Bei den Antriebskonfigurationen gemäß den Fig. 1a bis 2b handelt es sich lediglich um eine beispielhafte Antriebskonfiguration, wobei weitere Konfigurationen, beispielsweise gemäß den Figuren 4a bis 4b, sowie Figuren 5a bis 5d möglich sind.

Ferner ist festzustellen, dass bei den in den Figuren 1a bis 2b sowie 6a und 6b gezeigten Varianten und darüber hinaus auch bei den Ausführung gemäß Figur 4c der hintere bzw. zweite Rahmenteil 15 integral eine aus der Draufsicht im wesentlichen rechteckige Struktur als Lastenträger 15' ausgebildet ist, auf welcher also die durch das Lastenrad zu transportierenden Lasten unmittelbar oder beispielsweise über eine nicht dargestellte Aufnahme, wie einer Plattform, einem Korb oder Sitzen, an dem zweiten Rahmenteil 15 angeordnet werden können. Der zweite Rahmenteil 15 umfasst also integral die aus der Draufsicht im wesentlichen rechteckige Struktur, die als Lastenträger 15' ausgebildet ist, auf welcher also die durch das Lastenrad 1 zu transportierenden Lasten unmittelbar oder beispielsweise über eine nicht dargestellte Aufnahme, wie eine Plattform, einen Korb oder Sitze, an dem zweiten Rahmenteil angeordnet werden können.

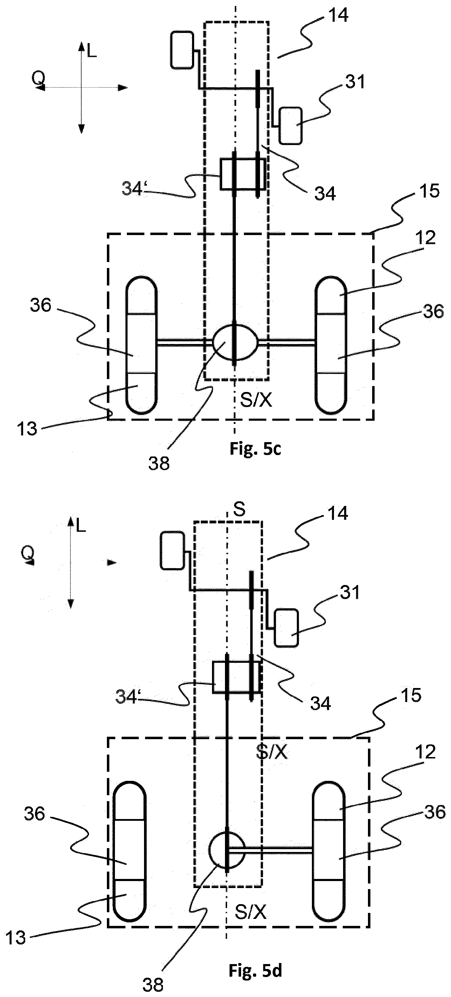

Es versteht sich, dass auch die Antriebsvarianten der Fig. 4a und 4b sowie der Figuren 5 a bis 5d einen derartigen Lastenträger aufweisen können, auch wenn in den lediglich ausschnittsweisen Darstellungen auf eine Abbildung zugunsten einer besseren Übersichtlichkeit verzichtet wurde.

Bei der Variante gemäß den Figuren 1a und 1b wird die Verschwenkbarkeit bzw. Drehbarkeit des vorderen bzw. ersten Rahmenteils 14 gegenüber dem hinteren bzw. zweiten Rahmenteil 15, welcher sich über seine in Querrichtung Q des Fahrzeugs beabstandeten Räder 12, 13 gegen den Boden abstützt, durch zwei entlang der Schwenkachse X zueinander beabstandete einzelne Gelenke 21, 22 realisiert. Gleiches gilt für die Variante gemäß den Figuren 6a bis 6b.

Wie aus Fig. 1a ersichtlich sind beide Gelenke 21,22 unterhalb des Lastenträgers 15' angeordnet. Insbesondere ist das erste 21 und das zweite Gelenk 22 in Längsrichtung L des Fahrzeugs 1 vor der Hinterachse angeordnet. Bei der in den Fig. 6a und 6b dargestellten Variante sind die beiden Gelenke 21,22 ebenfalls unterhalb des Lastenträgers 15' angeordnet, wobei das erste Gelenk 21 in der Längsrichtung L vor und das zweite Gelenk 22 in der Längsrichtung L des Fahrzeugs 1 hinter der die beiden Räder 12,13 tragenden gemeinsamen Achse angeordnet sind.

Grundsätzlich gilt jedoch: je weiter die einzelnen Gelenke 21, 22 entlang der Schwenkachse X beabstandet sind, desto besser können die zwischen den Rahmenteilen 14 ,15 wirkenden Kräfte abgestützt werden. Hierzu können auch noch weitere einzelne Gelenke vorgesehen werden. Vorliegend sind die beiden einzelnen Gelenke 21, 22 als Kugelgelenk bzw. Kugelkopfgelenk ausgebildet, welche seit langem im Stand der Technik bekannt sind und deren Aufbau daher nicht näher beschrieben werden soll. Diesbezüglich wird lediglich darauf verwiesen, dass ein Gelenkkopf des Kugelgelenks im Wesentlichen starr mit einem der Rahmenteile 14 ,15 verbunden ist und dass eine Gelenkpfanne, in welcher der Gelenkkopf mehrachsig drehbar gelagert ist, im Wesentlichen starr mit dem jeweils anderen Rahmenteil 14, 15 verbunden ist. Durch zumindest zwei solcher als Kugelgelenk ausgebildeten Gelenke 21, 22, werden deren Freiheitsgrade auf eine Drehbarkeit um die Schwenkachse X eingeschränkt.

Abweichend davon sieht die Variante gemäß den Figuren 2a und 2b keine zwei einzelnen Gelenke 21, 22 vor, sondern ausschließlich ein einzelnes Gelenk 23, welches durch ein längliches Radiallager bzw. Gelenk oder auch durch mehrere in einer Baueinheit gekapselte Radiallager bzw. Gelenke gebildet sein kann. Gegenüber der Ausführung der Figuren 1a und 1b ergibt sich dadurch eine bessere Kapselung des Gelenks 23, so dass dieses einfacher verbaut werden kann und besser vor Verschmutzung geschützt ist. Allerdings ergibt sich dadurch meist eine im Vergleich zu der die Kräfte zwischen den Rahmenteilen 14 ,15 bei der Variante gemäß den Figuren 1a und 1b abstützenden Strecke, eine geringere Strecke zur Abstützung der Kräfte, welche im bei dem Fahrzeug 1 in den Figuren 2a und 2b der Länge des einzelnen Gelenks 23 entlang der Schwenkachse X entspricht.

Vorteilhaft bei den Varianten gemäß den Figuren 1a bis 2b sowie 6a bis 6b ist auch, dass ein Fahrradsattel und die Antriebsvorrichtung 31 an dem vorderen bzw. ersten Rahmenteil 14 angeordnet sind und sich dadurch beim Schwenken bzw. Neigen des ersten Rahmenteils 14 mit einem auf dem Fahrzeug 1 bzw. auf dem Fahrradsattel sitzenden Fahrer in Kurven neigen, so dass sich ein Fahrgefühl wie bei einem herkömmlichen Rad einstellt.

In den jeweiligen Aufsichten der Varianten in den Figuren 1b und 2b, 6b sind neben der Mittel-, Ruhe- oder Neutralstellung des ersten Rahmenteils 14, welche mit durchgehender Linie dargestellt ist, auch beispielhaft gegenüber dem zweiten Rahmenteil 15 ausgelenkten bzw. verschwenkte Stellungen des ersten Rahmenteils 14 mit gestrichelten Linien dargestellt. Dabei wird deutlich, dass der Aufstandspunkt A sich nicht oder zumindest im Wesentlichen nicht verschiebt und sich der vordere bzw. erste Rahmenteil 14 ohne Änderung der Spur seines Einzelrades 14 gegenüber dem hinteren bzw. zweiten Rahmenteil 15 in die Querrichtung Q des Fahrzeugs kippen bzw. drehen bzw. verschwenken lässt.

Bei einer Änderung der Fahrzeuggeometrie, beispielsweise durch Druckverlust im Einzelrad 11 oder Wechsel des Einzelrades 11, kann es dazu kommen, dass sich der Aufstandspunkt A des Einzelrades 11 verschiebt, so dass die durch die Gelenke 21, 22, 23 bestimmte Schwenkachse X nicht mehr bzw. nicht mehr exakt durch den Aufstandspunkt A verlaufen würde. Daher ist vorgesehen, dass die Gelenke 21, 22, 23 einstellbar sind, was jedoch in den Figuren nicht dargestellt ist. Bei der Variante gemäß Figur 1 ist hierzu eine Position des ersten Gelenks 21 und/oder des zweiten Gelenks 22 in Längsrichtung L und/oder Hochrichtung H des Fahrzeugs veränderbar, so dass sich durch eine entsprechende Positionsänderung bzw. Positionsverschiebung der Verlauf der Schwenkachse X auf einen neuen Aufstandspunkt A einstellen lässt. Gleiches gilt auch für ein einzelnes Gelenk 23 gemäß der Ausführung der Figuren 2a und 2b, wobei hier alternativ zu einer Einstellbarkeit der Position auch eine Einstellbarkeit des Winkels vorgesehen sein kann, so dass der Winkel des Gelenks 23 gegenüber dem ersten Rahmenteil 13 und/oder dem zweiten Rahmenteil 15 in der Variante gemäß den Figuren 2a und 2b verändert und dadurch der Verlauf der Schwenkachse X eingestellt werden kann.

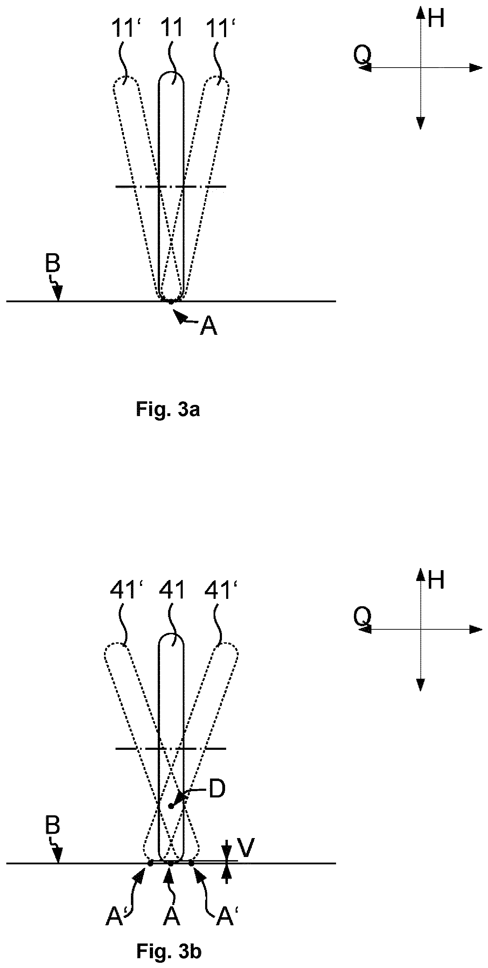

Zur Verdeutlichung des sich aus der erfindungsgemäßen Ausführung ergebenden Unterschieds gegenüber dem Stand der Technik, ist in Figur 3a das Einzelrad 11 eines erfindungsgemäßen Fahrzeugs 1 und in Figur 3b ein Einzelrad 41 eines aus dem Stand der Technik bekannten Fahrzeugs dargestellt. Durch ein Verkippen des ersten Rahmenteils 14 gegenüber dem zweiten Rahmenteil 15, wie es beispielsweise bei den Varianten gemäß den Figuren 1a bis 2b vorgesehen ist, neigt sich das Einzelrad 11 bzw. das Vorderrad um den Aufstandspunkt A, so dass dieser als Drehpunkt für das Einzelrad 11 wirkt. Entsprechend wird das Einzelrad 11 beim Übergang seine verkippten Stellungen 11' um einen in der Ebene des Bodens B liegenden Drehpunkt gedreht, was dem Verhalten eines normalen Rades entspricht.

Davon abweichend zeigt Figur 3b das Verhalten eines Fahrzeugs des Stands der Technik, welches ebenfalls einen geteilten Rahmen aufweist, wobei die Schwenkachse des dortigen vorderen Rahmenteils gegenüber dem dortigen hinteren Rahmenteils nicht durch den Aufstandspunkt A des Einzelrades 41 auf dem Boden sondern beispielsweise parallel zum Boden verläuft, so dass sich für das Einzelrad 41 bei dem Verschwenken der Rahmenteile ein Drehpunkt D ergibt. Beim Verkippen der Rahmenteile dreht sich das Einzelrad 41 in seine verkippten Stellungen 41', wobei sich dadurch den Aufstandspunkt A in Querrichtung Q verschiebt, so dass sich abweichende Aufstandspunkte A' bzw. eine Spurverschiebung des Einzelrades 41 ergibt. Aufgrund der Schwerkraft bleibt das Einzelrad 41 mit dem Boden B in Kontakt. Würde das Einzelrad um seine Drehachse bzw. um seinen Drehpunkt D fixiert, würde sich gegenüber dem Boden B bei der Drehung ein Höhenversatz H ergeben.

Die Figuren 4a und 4b sowie 5a bis 5d zeigen beispielhaft verschiedene Antriebskonzepte, welche bei dem erfindungsgemäßen Fahrzeug verwendet werden können. Dabei entspricht der prinzipielle Aufbau des in den Figuren 4a und 4b sowie 5a bis 5d lediglich abschnittsweise dargestellten Fahrzeugs 1 dem Aufbau eines Fahrzeugs 1 gemäß den Varianten der Figuren 1a bis 2b sowie 6a bis 6b.

Die Ausführungen gemäß den Figuren 4a und 4b sehen einen Kettentrieb bzw. ein Kettengetriebe 34 als Vorrichtung zur Drehmomentübertragung vor, wobei die Kette des Kettengetriebes 34 ausgebildet ist, sich innerhalb eines vorbestimmten Winkelbereichs um die Schwenkachse X verdrehen bzw. tordieren zu lassen ohne Schaden zunehmen.

Statt eines zentral angeordneten Differentials 35 sieht die Weiterbildung gemäß Figur 4a ein Gleichlaufgetriebe 38 vor, welches über die als Kettengetriebe 34 ausgebildete Vorrichtung zur Drehmomentübertragung 34 ein durch eine muskelkraftbetriebene Antriebsvorrichtung 31 sowie einen Mittelmotor 33 erzeugtes Drehmoment auf die Räder überträgt. Beispielhaft ist das Gleichlaufgetriebe 38 mittig auf der Hinterachse angeordnet, wohingegen das Kettengetriebe 34 seitlich zu einer Symmetrieebene S des Fahrzeugs angeordnet ist. Jedes der Räder 12, 13 des Radpaares sieht eine Freilaufnabe 36 vor, welche gemeinsam wie ein Differential 35 wirken.

Statt eines Mittelmotors 33 sieht das Antriebskonzept gemäß Figur 4b jeweils einen den Rädern 12, 13 des Radpaares zugeordneten Radnabenmotor 32 sowie eine als kettengetriebenes Differential 37 ausgebildete Ausgleichsvorrichtung 38 vor. Beispielhaft ist sowohl das Differential 37 als auch das Kettengetriebe 34 seitlich zu einer Symmetrieebene S des Fahrzeugs angeordnet.

Die Figuren 5a bis 5d stellen vier weitere erfindungsgemäße Antriebskonzepte für die Fahrzeuge gemäß den Figuren 1a bis 2b vor. Diese weisen zumindest eine ein Drehmoment erzeugende Antriebsvorrichtung 31, 33 auf, welche an dem ersten Rahmenteil 14 angeordnet und ausgebildet ist, das Drehmoment über eine Vorrichtung zur Drehmomentübertragung 34 auf zumindest eines der Räder 12, 13 des Radpaares zu übertragen. Die Vorrichtung zur Drehmomentübertragung 34 umfasst eine Ausgleichsvorrichtung 38 zum Ausgleich einer durch die Drehung des ersten Rahmenteils 14 gegenüber dem zweiten Rahmenteil 15 um die Schwenkachse X bewirkten Torsion der Vorrichtung zur Drehmomentübertragung 34. Zur Erzielung einer optimalen Wirkungsweise ist in allen Varianten die Vorrichtung zur Drehmomentübertragung 34 zumindest im verschwenkten Bereich sowie die Ausgleichsvorrichtung 38 auf einer in Längsrichtung L ausgerichteten Symmetrieebene S des Fahrzeugs 1 angeordnet. Alternativ können aber auch die Vorrichtung zur Drehmomentübertragung 34 und/oder die Ausgleichsvorrichtung 38 seitlich von der Symmetrieebene S angeordnet sein.

Gemäß Fig. 5a ist dem ersten Rahmenteil 14 eine muskelkraftbetriebene erste Antriebsvorrichtung 31, welche vorliegend als Tretlager bzw. als Pedalwerk ausgeführt ist, zugeordnet. Diese kann optional einen Motor 33 umfassen, der durch Motorkraft den Muskelkraftbetrieb motorisch unterstützen kann. Diese Motor 33 ist beispielhaft als Mittelmotor ausgebildet und koaxial zum Pedalantrieb angeordnet. Der Pedalantrieb ist über ein zweistufiges Kettengetriebe der ersten Vorrichtung zur Drehmomentübertragung 34 mit der Ausgleichsvorrichtung 38 verbunden.

Das Kettengetriebe umfasst in der dargestellten Ausführungsform zwei Stufen mit jeweils einer eigenen Kette. Eine erste Kette ist demnach zur Übertragung eines Drehmoments von der ersten Antriebsvorrichtung 31 auf eine Antriebswelle 34' vorgesehen. Von dieser wird ein Drehmoment über eine zweite Kette auf ein hinteres Ritzel übertragen, welches der Ausgleichsvorrichtung 38 zugeordnet beziehungsweise mit dieser drehmomentübertragend verbunden ist. Die Antriebswelle 34' kann lediglich als Welle ausgebildet sein und einen seitlichen Versatz in der Kettenführung ermöglichen. Dies ermöglicht - wie voranstehend beschrieben - zumindest die im verschwenkten Bereich angeordnete hintere Kette entlang der Symmetrieebene S des Fahrzeugs in der Längsrichtung des Fahrzeugs zu führen.

Optional kann die Antriebswelle 34' aber auch ein Getriebe umfassen und zur Übersetzung des übertragenen Drehmoments ausgebildet sein. Vorzugsweise ist das Getriebe schaltbar ausgebildet, so dass mindestens zwei Gänge oder mehr als zwei Gänge wählbar sind.

In jedem Fall ist die Antriebswelle 34' ebenfalls dem ersten Rahmenteil 14 zugeordnet. Dies bedeutet, dass die Antriebswelle 34' bei einem Schwenken des ersten Rahmenteils 14 gegenüber dem zweiten Rahmenteil 15 ebenfalls mit verschwenkt wird.

In der in Fig. 5a dargestellten Ausführungsform umfasst die Ausgleichsvorrichtung 38 ein Gleichlaufgelenk. Dieses ist dazu vorgesehen, eine Verwindung der Kette zu vermeiden, indem das hintere Ritzel beziehungsweise der damit verbundene Teil des Gleichlaufgelenks gemeinsam mit der Kette verschwenkt wird. Somit findet der Ausgleich der durch das Schwenken des ersten Rahmenteils 14 gegenüber dem zweiten Rahmenteil 15 um die Schwenkachse X bewirkten Schwenkbewegung der Vorrichtung zur Drehmomentübertragung 34 im Gleichlaufgelenk statt.

Das Gleichlaufgelenk ist gemäß der Darstellung mittig (also ebenfalls auf der Symmetrieebene S des Fahrzeugs 1) auf der Hinterachse des Fahrzeugs 1 angeordnet. Die Hinterachse kann als Starrachse durchgängig ausgeführt sein oder durch zwei starre Wellen gebildet werden, die drehmomentübertragend mit den beiden Rädern 12,13 des Radpaares verbunden sind.

Lediglich optional kann jedes der beiden Räder 12,13 eine Freilaufnabe 36 zur Verbindung mit der jeweiligen Welle aufweisen. Alternativ oder zusätzlich zu der jeweiligen Freilaufnabe 36 kann jeweils ein Radnabenmotor (nicht dargestellt) für jedes der beiden Räder 12,13 vorgesehen sein.

Die in Fig. 5b dargestellte Ausführungsform stimmt im Wesentlichen mit der in Fig. 5a dargestellten Ausführungsform überein, so dass zu deren Erläuterung auf die dortige Beschreibung verwiesen wird. Ein Unterschied liegt in der Ausgestaltung der Ausgleichsvorrichtung 38 begründet, die anstelle eines Gleichlaufgelenks ein Differential 37 umfasst. Dieses ist dem ersten Rahmenteil 14 zugeordnet und wird dementsprechend mit diesem verschwenkt. Auf diese Weise wird eine durch das Schwenken des ersten Rahmenteils 14 gegenüber dem zweiten Rahmenteil 15 um die Schwenkachse X bewirkte Torsion der Vorrichtung zur Drehmomentübertragung 34 vermieden. Eine Verschwenkung findet erst nachgelagert durch das Schwenken des Differentials 37 relativ zu dem zweiten Rahmenteil 15 statt. Zu dessen Ausgleich umfasst die Ausgleichsvorrichtung in der dargestellten Ausführungsform zwei Gelenkwellen 37', welche zwei Abtriebsseiten des Differentials 37 mit den beiden Rädern 12,13 des Räderpaars gelenkig und drehmomentübertragend verbinden.

Lediglich optional kann jeweils ein Radnabenmotor (nicht dargestellt) für jedes der beiden Räder 12,13 vorgesehen sein.

Die in Fig. 5c dargestellte Ausführungsform stimmt im Wesentlichen mit der in Fig. 5a oder 5b dargestellten Ausführungsformen überein, so dass zu deren Erläuterung auf die dortige Beschreibung verwiesen wird. Ein Unterschied liegt in der Ausgestaltung der motorischen Antriebsunterstützung begründet. Anstelle des einen Motors 33 werden in den beiden Rädern 12,13 jeweils ein Radnabenmotor 32 vorgesehen, auf die ein mechanisches Drehmoment über die Wellen übertragen wird. Die Ausgleichsvorrichtung 38 kann entweder ein Gleichlaufgelenk analog zu Fig. 5a oder ein Differential 37 mit Gelenkwellen 37' analog zu Fig. 5b sein.

Fig. 5d zeigt eine Ausführungsform, die im Wesentlichen auf der in Fig. 5c beschriebenen Ausführungsform bei gleichzeitiger Verwendung des Gleichlaufgelenks basiert. Ein Unterschied liegt darin begründet, dass das Gleichlaufgelenk abtriebsseitig lediglich mit einem der beiden Räder 12,13 des Radpaares drehmomentübertragend verbunden ist. Statt einer Starrachse oder zwei starren Wellen ist lediglich eine starre Welle zu dem rechten Rad 12 dargestellt. Ebenso wäre selbstverständlich eine gespiegelte Anordnung möglich, bei der lediglich das linke Rad 13 durch eine starre Welle angetrieben wird. Das jeweils andere Rad des Radpaares wird ausschließlich über einen eigenen Radnabenmotor 32 angetrieben.

Gemäß Fig. 5d erfolgt also über die in Längsrichtung L des Fahrzeugs hintere, zweite Kette des Kettengetriebes 34 eine Drehmomentübertragung auf das in der Bildebene rechte Rad 12 der beiden Räder 12, 13 des Radpaares, in welchem ein Radnabenmotor 32 als "Master" vorgesehen ist. Die beiden Räder 12, 13 des Radpaares sind nicht über eine gemeinsame Achse oder Welle sondern jeweils getrennt bzw. einzeln am zweiten Rahmenteil 15 befestigt. Das in der Bildebene linke Rad 13 verfügt ebenfalls über einen Radnabenmotor 32, der jedoch als "Slave" konfiguriert ist. Abhängig von einem von den Kettentrieben 34, 34' auf den als "Master" konfigurierten Radnabenmotor 32 des rechten Rades 12 übertragenen Drehmoment und/oder abhängig von einer z.B. über einen "Gas"-Hebel einstellbaren Steuerung, kann der als "Slave" konfigurierte Radnabenmotor 32 des linken Rades 13 angesteuert und das linke Rad 13 angetrieben werden.

In allen Ausführungsformen gemäß den Fig. 5a bis 5d kann dank der jeweiligen Ausgleichsvorrichtung 38 eine verschleißende Torsion der Kette wirkungsvoll vermieden werden.

Wie voranstehend bereits beschrieben, sind bei der Variante gemäß den Figuren 6a und 6b die beiden Gelenke 21,22 ebenfalls unterhalb des Lastenträgers 15' angeordnet. Das erste Gelenk 21 ist in der Längsrichtung L vor und das zweite Gelenk 22 in der Längsrichtung L des Fahrzeugs 1 hinter der die beiden Räder 12,13 tragenden gemeinsamen Achse angeordnet. Hierbei ist der erste Rahmenteil 14 mit einem armförmigen Abschnitt 14' bis zu dem zweiten Gelenk 22 erstreckt, um dieses zu tragen. Der armförmige Abschnitt 14' erstreckt sich also ebenfalls bis hinter die gemeinsame Achse. Hierbei weist der armförmige Abschnitt einen bogenförmigen Abschnitt auf, welcher zur Aussparung der gemeinsamen Achse vorgesehen ist. Ansonsten basiert die Variante der Figuren 6a und 6b der Variante gemäß den Figuren 1a,1b, so dass zur Beschreibung der weiteren Komponenten auf die dortige Beschreibung verwiesen wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Lastenrad (1) mit einem mehrteiligen Rahmen, einem Einzelrad (11) und einem Radpaar, mit zwei zueinander beabstandeten Rädern (12, 13),
wobei das Einzelrad (11) mit einem ersten Rahmenteil (14) des Rahmens verbunden ist
und wobei die zwei Räder (12, 13) des Radpaares an einem zweiten Rahmenteil (15) des Rahmens um eine gemeinsame Achse rotierbar gelagert sind,
wobei der erste Rahmenteil (14) und der zweite Rahmenteil (15) durch zumindest ein Gelenk (21, 22, 23) verbunden und gegeneinander um eine durch das zumindest eine Gelenk bestimmte Schwenkachse (X) drehbar sind,
wobei die Schwenkachse (X) durch einen Aufstandspunkt (A) des Einzelrades (11) verläuft, wobei das Lastenrad (1) außerdem zumindest eine ein Drehmoment erzeugende erste Antriebsvorrichtung (31) aufweist,
welche an dem ersten Rahmenteil (14) angeordnet und ausgebildet ist, das Drehmoment über eine Vorrichtung zur Drehmomentübertragung (34) auf zumindest eines der Räder (12, 13) des Radpaares zu übertragen, **dadurch gekennzeichnet, dass** die Vorrichtung zur Drehmomentübertragung (34) eine Ausgleichsvorrichtung (38) zum Ausgleich einer durch die Drehung des ersten Rahmenteils (14) gegenüber dem zweiten Rahmenteil (15) um die Schwenkachse (X) bewirkten Torsion der Vorrichtung zur Drehmomentübertragung (34) umfasst,
wobei die Ausgleichsvorrichtung (38) ein Gleichlaufgelenk umfasst, dessen Abtriebsachse von einer Hinterachse des Lastenrads (1) gebildet ist, und
wobei sich ein an dem Gleichlaufgelenk antriebsseitig vorgesehenes Ritzel gegenüber der Abtriebsachse des Gleichlaufgelenks kippen lässt.

2. Lastenrad (1) nach Anspruch 1, wobei die Vorrichtung zur Drehmomentübertragung (34) mindestens ein Zugmittel, insbesondere ein eine Kette aufweisendes Kettengetriebe (34) und/oder einen einen Zahnriemen aufweisenden Riemenantrieb, umfasst.

3. Lastenrad (1) nach Anspruch 1 oder 2, **dadurch gekennzeichnet, dass** das Gleichlaufgelenk dem ersten Rahmenteil (14) oder dem zweiten Rahmenteil (15) zugeordnet ist.

4. Lastenrad (1) nach Anspruch 1 oder 2, **dadurch gekennzeichnet, dass** die Ausgleichsvorrichtung (38) ein Differential (37) umfasst, welches über zumindest eine Gelenkwelle (37') das Drehmoment auf das zumindest eine Rad (12,13) des Radpaares überträgt.

5. Lastenrad (1) nach mindestens einem der Ansprüche 1 bis 4, **dadurch gekennzeichnet, dass** zumindest eines der beiden Räder (12,13) des Radpaares einen Radnabenmotor (32) aufweist.

6. Lastenrad (1) nach mindestens einem der Ansprüche 1 bis 5,
wobei das Einzelrad (11) ein Vorderrad ist und das Vorderrad an einer Radgabel (16) um eine Lenkachse schwenkbar mit dem ersten Rahmenteil (14) verbunden ist.

7. Lastenrad (1) mindestens einem der Ansprüche 1 bis 6,
wobei der erste Rahmenteil (14) und der zweite Rahmenteil (15) durch zumindest zwei Gelenke (21, 22) verbunden sind, welche beabstandet zueinander auf der Schwenkachse (A) angeordnet sind,
ein erstes Gelenk (21) der zwei Gelenke (21, 22) ein Kugelgelenk, ein Radiallager oder ein Elastomerelement ist
und ein zweites Gelenk (22) der zwei Gelenke (21, 22) ein Kugelgelenk, ein Radiallager oder ein Elastomerelement ist.

8. Lastenrad (1) nach dem vorhergehenden Anspruch 7,
wobei eine Position des ersten Gelenks (21) und/oder des zweiten Gelenks (22) gegenüber dem ersten Rahmenteil (14) und/oder dem zweiten Rahmenteil (15) einstellbar ist.

9. Lastenrad (1) nach dem vorhergehenden Anspruch 8, wobei die Position oder die jeweilige Position des ersten Gelenks (21) und/oder des zweiten Gelenks (22) in Horizontal- beziehungsweise auf das Lastenrad (1) bezogen in einer Hochrichtung und/oder in einer Vertikal- beziehungsweise auf das Lastenrad (1) bezogen in einer Längsrichtung einstellbar ist.

10. Lastenrad (1) nach mindestens einem der Ansprüche 1 bis 6,
wobei der erste Rahmenteil (14) und der zweite Rahmenteil (15) durch genau ein durch zumindest ein Radiallager gebildetes Gelenk (23) verbunden sind.

11. Lastenrad (1) nach Anspruch 10,
wobei ein Winkel des einzelnen Gelenks (23) gegenüber dem ersten Rahmenteil (14) und/oder dem zweiten Rahmenteil (15) einstellbar ist, um den Verlauf der Schwenkachse (X) durch den Aufstandspunkt (A) einstellen zu können,
ferner umfassend eine Begrenzungsvorrichtung, welche ausgebildet ist, eine Verdrehbarkeit des ersten Rahmenteils (14) gegenüber dem zweiten Rahmenteil (15) um die Schwenkachse (X) zu begrenzen,
und/oder ferner umfassend eine Rückstellvorrichtung, welche ausgebildet ist, das erste Rahmenteil (14) aus einer gegenüber einer vorbestimmten Mittelstellung ausgelenkten Stellung zurück in die Mittelstellung zu drehen.

## Claims

1. Cargo bicycle (1) with a multi-part frame, a single wheel (11) and a wheel pair, with two mutually spaced wheels (12, 13),
wherein the single wheel (11) is connected to a first frame part (14) of the frame
and wherein the two wheels (12, 13) of the wheel pair are rotatably mounted on a second frame part (15) of the frame about a common axis,
wherein the first frame part (14) and the second frame part (15) are connected by at least one joint (21, 22, 23) and are rotatable relative to each other about a pivot axis (X) defined by the at least one joint,
wherein the pivot axis (X) extends through a contact point (A) of the single wheel (11), wherein the cargo bicycle (1) furthermore has at least a first torque-generating drive device (31),
which is arranged on the first frame part (14) and is configured to transmit the torque via a device for torque transmission (34) to at least one of the wheels (12, 13) of the wheel pair, **characterized in that** the device for torque transmission (34) comprises a compensation device (38) for compensating for a torsion of the device for torque transmission (34) that is caused by the rotation of the first frame part (14) in relation to the second frame part (15) about the pivot axis (X),
wherein the compensation device (38) comprises a constant velocity joint, the output axle of which is formed by a rear axle of the cargo bicycle (1), and
wherein a sprocket provided on the drive side of the constant velocity joint can be tilted in relation to the output axle of the constant velocity joint.

2. Cargo bicycle (1) according to Claim 1, wherein the device for torque transmission (34) comprises at least one traction means, in particular a chain transmission (34) having a chain and/or a belt drive having a toothed belt.

3. Cargo bicycle (1) according to Claim 1 or 2, **characterized in that** the constant velocity joint is assigned to the first frame part (14) or the second frame part (15).

4. Cargo bicycle (1) according to Claim 1 or 2, **characterized in that** the compensation device (38) comprises a differential (37) which by way of at least one articulated shaft (37') transmits the torque to the at least one wheel (12, 13) of the wheel pair.

5. Cargo bicycle (1) according to at least one of Claims 1 to 4, **characterized in that** at least one of the two wheels (12, 13) of the wheel pair has a wheel hub motor (32).

6. Cargo bicycle (1) according to at least one of Claims 1 to 5,
wherein the single wheel (11) is a front wheel and the front wheel is connected to the first frame part (14) pivotably about a steering axis on a wheel fork (16).

7. Cargo bicycle (1) according to at least one of Claims 1 to 6,
wherein the first frame part (14) and the second frame part (15) are connected by at least two joints (21, 22), which are arranged spaced apart from each other on the pivot axis (A),
a first joint (21) of the two joints (21, 22) is a ball joint, a radial bearing or an elastomer element
and a second joint (22) of the two joints (21, 22) is a ball joint, a radial bearing or an elastomer element.

8. Cargo bicycle (1) according to preceding Claim 7,
wherein a position of the first joint (21) and/or of the second joint (22) relative to the first frame part (14) and/or the second frame part (15) is adjustable.

9. Cargo bicycle (1) according to preceding Claim 8, wherein the position, or the respective position, of the first joint (21) and/or of the second joint (22) is adjustable in a horizontal direction, or in a height direction in relation to the cargo bicycle (1), and/or in a vertical direction, or in a longitudinal direction in relation to the cargo bicycle (1).

10. Cargo bicycle (1) according to at least one of Claims 1 to 6,
wherein the first frame part (14) and the second frame part (15) are connected by exactly one joint (23) formed by at least one radial bearing.

11. Cargo bicycle (1) according to Claim 10,
wherein an angle of the single joint (23) is adjustable in relation to the first frame part (14) and/or the second frame part (15) in order to be able to adjust the profile of the pivot axis (X) through the contact point (A),
further comprising a limiting device, which is configured to limit a rotatability of the first frame part (14) relative to the second frame part (15) about the pivot axis (X),
and/or further comprising a restoring device, which is configured to rotate the first frame part (14) from a position deflected relative to a predetermined central position back into the central position.

## Revendications

1. Vélo cargo (1) comprenant un cadre en plusieurs parties, une roue individuelle (11) et une paire de roues constituée de deux roues (12, 13) espacées l'une de l'autre,
dans lequel la roue individuelle (11) est reliée à une première partie de cadre (14) du cadre
et dans lequel les deux roues (12, 13) de la paire de roues sont montées à rotation autour d'un axe commun sur une deuxième partie de cadre (15) du cadre,
dans lequel la première partie de cadre (14) et la deuxième partie de cadre (15) sont reliées par au moins une articulation (21, 22, 23) et peuvent pivoter l'une par rapport à l'autre autour d'un axe de pivotement (X) défini par ladite au moins une articulation,
dans lequel l'axe de pivotement (X) passe par un point de contact au sol (A) de la roue individuelle (11), le vélo cargo (1) comprenant en outre au moins un premier dispositif d'entraînement (31) produisant un couple,
qui est agencé sur la première partie de cadre (14) et conçu pour transmettre le couple à au moins l'une des roues (12, 13) de la paire de roues par l'intermédiaire d'un dispositif de transmission de couple (34), **caractérisé en ce que** le dispositif de transmission de couple (34) comprend un dispositif de compensation (38) destiné à compenser une torsion du dispositif de transmission de couple (34) provoquée par la rotation de la première partie de cadre (14) par rapport à la deuxième partie de cadre (15) autour de l'axe de pivotement (X),
dans lequel le dispositif de compensation (38) comprend un joint homocinétique dont l'axe de sortie est formé par un essieu arrière du vélo cargo (1), et
dans lequel un pignon prévu du côté de l'entrée du joint homocinétique peut s'incliner par rapport à l'axe de sortie du joint homocinétique.

2. Vélo cargo (1) selon la revendication 1, dans lequel le dispositif de transmission de couple (34) comprend au moins un organe de traction, en particulier une transmission par chaîne (34) comprenant une chaîne et/ou un entraînement par courroie comprenant une courroie crantée.

3. Vélo cargo (1) selon la revendication 1 ou 2, **caractérisé en ce que** le joint homocinétique est associé à la première partie de cadre (14) ou à la deuxième partie de cadre (15).

4. Vélo cargo (1) selon la revendication 1 ou 2, **caractérisé en ce que** le dispositif de compensation (38) comprend un différentiel (37) qui transmet le couple à au moins une roue (12, 13) de la paire de roues par l'intermédiaire d'au moins un arbre de transmission articulé (37').

5. Vélo cargo (1) selon au moins l'une des revendications 1 à 4, **caractérisé en ce qu'**au moins l'une des deux roues (12, 13) de la paire de roues comporte un moteur moyeu (32).

6. Vélo cargo (1) selon au moins l'une des revendications 1 à 5,
dans lequel la roue individuelle (11) est une roue avant et est reliée à la première partie de cadre (14) par une fourche (16), de manière à pouvoir pivoter autour d'un axe de direction.

7. Vélo cargo (1) selon au moins l'une des revendications 1 à 6,
dans lequel la première partie de cadre (14) et la deuxième partie de cadre (15) sont reliées par au moins deux articulations (21, 22) disposées à distance l'une de l'autre sur l'axe de pivotement (A),
une première articulation (21) des deux articulations (21, 22) étant une rotule, un palier radial ou un élément en élastomère,
et une deuxième articulation (22) des deux articulations (21, 22) étant une rotule, un palier radial ou un élément en élastomère.

8. Vélo cargo (1) selon la revendication précédente 7, dans lequel la position de la première articulation (21) et/ou de la deuxième articulation (22) par rapport à la première partie de cadre (14) et/ou à la deuxième partie de cadre (15) est réglable.

9. Vélo cargo (1) selon la revendication précédente 8, dans lequel la position, ou chacune des positions, de la première articulation (21) et/ou de la deuxième articulation (22) est réglable dans une direction horizontale, correspondant à une direction de hauteur par rapport au vélo cargo (1), et/ou dans une direction verticale, correspondant à une direction longitudinale par rapport au vélo cargo (1).

10. Vélo cargo (1) selon au moins l'une des revendications 1 à 6,
dans lequel la première partie de cadre (14) et la deuxième partie de cadre (15) sont reliées par une seule articulation (23) constituée d'au moins un palier radial.

11. Vélo cargo (1) selon la revendication 10,
dans lequel un angle de l'articulation unique (23) par rapport à la première partie de cadre (14) et/ou à la deuxième partie de cadre (15) est réglable afin de pouvoir ajuster l'orientation de l'axe de pivotement (X) de manière qu'il passe par le point de contact au sol (A),
comprenant en outre un dispositif de limitation conçu pour limiter la rotation de la première partie de cadre (14) par rapport à la deuxième partie de cadre (15) autour de l'axe de pivotement (X),
et/ou comprenant en outre un dispositif de rappel conçu pour faire pivoter la première partie de cadre (14), depuis une position déviée par rapport à une position médiane prédéfinie, vers ladite position médiane.
